# EUROPEAN PATENT APPLICATION

(11) **EP 4 807 965 A1**
(43) Date of publication of application: **16.09.2026**
(21) Application number: 24889175.6
(22) Date of filing: 08.11.2024
(51) Int. Cl.: H02M 3/335, H02M 3/28, H02M 3/158, H02M 1/00

(54) **POWER CONVERSION DEVICE**

(30) Priority: 09.11.2023 KR 20230154900; 09.11.2023 KR 20230154902
(71) Applicant: LG Innotek Co., Ltd., Seoul 07796 (KR)
(72) Inventor: LEE, Jae Sam, Seoul 07796 (KR); LEE, Sang Ki, Seoul 07796 (KR); CHOI, Ji Ung, Seoul 07796 (KR); PARK, Jun Yeong, Seoul 07796 (KR); KIM, Kyu Yeong, Seoul 07796 (KR)
(74) Representative: DREISS Patentanwälte PartG mbB
(86) International application number: PCT/KR2024/017626
(87) International publication number: WO 2025/100989

(57) **Abstract**

A power conversion device according to an embodiment of the present invention comprises: a first input/output unit connected to a high-voltage side; a first switching unit connected to the first input/output unit; a transformer unit including a first transformer and a second transformer and having a primary side connected to the first switching unit; a second switching unit connected to a secondary side of the transformer unit; and a second input/output unit connected to a low-voltage side and the secondary side of the transformer unit, wherein the first switching unit comprises a first switch and a second switch which are complementarily electrified, the second switching unit comprises a third switch connected to a secondary side of the first transformer and a fourth switch connected to a secondary side of the second transformer, and the first input/output unit comprises a high-voltage-side capacitor, receives an input of a low-voltage-side voltage to convert the voltage, and initially charges the high-voltage-side capacitor at a first voltage.

## Description

### TECHNICAL FIELD

The present invention relates to a power conversion device, and more particularly, to a power conversion device having high efficiency of power conversion.

### BACKGROUND ART

Recently, with an increase in capacity of batteries for storing electrical energy such as electric vehicles or hybrid vehicles, a voltage of each battery is increasing from 400 V to 800 V. In order to operate internal components such as the vehicle's electronic equipment using the electrical energy charged in the high-voltage battery, it is necessary to convert the voltage to a low level.

There is a need for a converter that stably supplies power by converting the voltage of the high-voltage battery to the low voltage and has high power conversion efficiency.

### DISCLOSURE OF THE INVENTION

### TECHNICAL PROBLEM

A technical problem to be solved by the present invention is to provide a power conversion device having high efficiency of power conversion.

### TECHNICAL SOLUTION

In order to solve the above technical problem, a power conversion device according to a first embodiment of the present invention includes: a first input/output unit connected to a high-voltage side; a first switching unit connected to the first input/output unit; a transformer unit including a first transformer and a second transformer, each of which has a primary side connected to the first switching unit; a second switching unit connected to a secondary side of the transformer unit; and a second input/output unit connected to the secondary side of the transformer unit and a low-voltage side, wherein the first switching unit includes a first switch and a second switch, which are complementarily electrically conducted, and the second switching unit includes: a third switch connected to a secondary side of the first transformer; and a fourth switch connected to a secondary side of the second transformer, wherein the first input/output unit includes a high-voltage-side capacitor and is configured to receive an input of a low-voltage-side voltage so as to convert the voltage so that the high-voltage-side capacitor is initially charged at a first voltage.

In addition, the power conversion device may further include: a first inductor connected in series to the transformer unit between the first input/output unit and the transformer unit; a second inductor connected to in parallel to the primary side of the first transformer; a third inductor connected in parallel to the primary side of the second transformer; and a first capacitor connected to a first node between the first input/output unit and the first inductor and connected in series to the second switch, wherein the first switch may be connected in series to the transformer unit, the second switch may be connected in parallel to the transformer unit, and the first switch may be connected to a second node between the first switch and the transformer unit.

In addition, the fourth switch may be turned on and be turned off after a seventh time, and the second switch and the third switch may be turned on so that the first capacitor is charged.

In addition, the second switch and the third switch may be turned off after the seventh time so that the high-voltage-side capacitor is charged.

In addition, each of the first switch to the fourth switch may include an MOSFET comprising a body diode.

In addition, after the high-voltage capacitor is initially charged at the first voltage, the high-voltage battery may be connected to the high-voltage side.

In addition, when the high-voltage battery is connected to the high-voltage side, the high-voltage battery may operate in a buck mode or boost mode, wherein the second switch may be turned off, and after a first time, the first switch may be turned on, wherein the first time may vary depending on an applied voltage.

In addition, the first switch may be turned off, and after a second time, the second switch may be turned on, and wherein the second time may be a preset time to be applied.

In addition, in the buck mode, the third switch may operate in response to an operation of the second switch or operate in response after the preset time is elapsed.

In addition, in the buck mode, the fourth switch may be turned on when a third time is elapsed after the second switch is turned off and be turned off when a fourth time is elapsed after the first switch is turned off, wherein the third time and the fourth time may vary depending on output current.

In order to solve the above technical problem, a power conversion device according to a second embodiment of the present invention includes: a first-1 input/output unit and a first-2 input/output unit, which are connected to a first high-voltage side and a second high-voltage side, which are connected in series, respectively; a first power conversion unit connected to the first input/output unit; a second power conversion unit connected to the first-2 input/output unit; and a second input/output unit connected to the first power conversion unit and the second power conversion unit, wherein an operation of the first power conversion unit or the second power conversion unit is controlled by using a difference between a first input voltage of the first power conversion unit and a second input voltage of the second power conversion unit.

In addition, the first power conversion unit and the second power conversion unit may operate in a peak current mode, a current rising slope in the peak current mode may be compensated for according to the difference between the first input voltage and the second input voltage.

In addition, when the first input voltage is less than the second input voltage, the current rise slope in the peak current mode of the first power conversion unit may decrease.

In addition, when the first input voltage is less than the second input voltage, the current rise compensation slope in the peak current mode of the first power conversion unit may increase.

In addition, when the first input voltage is less than the second input voltage, average current of the first power conversion unit may be less than average current of the second power conversion unit.

In addition, the power conversion device may further include a compensation unit configured to compensate for a difference between the first input voltage of the first power conversion unit and the second input voltage of the second power conversion unit, wherein a PWM signal applied to the first power conversion unit or the second power conversion unit may be generated according to an operation of the compensation unit.

In addition, a first battery may be connected to the first high-voltage side, and a second battery may be connected to the second high-voltage side, wherein operations of the first power conversion unit and the second power conversion unit may be controlled so that the first battery and the second battery are balanced.

In addition, the first power conversion unit may include: a first switching unit connected to the first-1 input/output unit; a transformer unit including a first transformer and a second transformer, each of which has a primary side connected to the first switching unit; a second switching unit connected to a secondary side of the transformer unit; and a second input/output unit connected to the secondary side of the transformer unit and a low-voltage side, wherein the first switching unit may include a first switch and a second switch, which are complementarily electrically conducted, and the second switching unit may include: a third switch connected to a secondary side of the first transformer; and a fourth switch connected to a secondary side of the second transformer.

In addition, the first switch may be connected in series to the transformer unit, and the second switch may be connected in parallel to the transformer unit.

In addition, the power conversion device may further include: a first inductor connected in series to the transformer unit between the first input/output unit and the transformer unit; a second inductor connected to in parallel to the primary side of the first transformer; a third inductor connected in parallel to the primary side of the second transformer; and a first capacitor connected to a first node between the first input/output unit and the first inductor and connected in series to the second switch, wherein the first switch may be connected to a second node between the first switch and the transformer unit.

### ADVANTAGEOUS EFFECTS

According to the embodiments of the present invention, when converting the voltage, the bidirectional operation may be possible, and the efficiency may be improved. In addition, the zero voltage switching may be performed, and the input voltages of the serially connected inputs may be balanced to enable the balancing, and also, the bidirectional driving and the initial charging may be possible.

### BRIEF DESCRIPTION OF THE DRAWINGS

FIG. 1 is a block diagram of a power conversion device according to an embodiment of the present invention.
FIG. 2 is a block diagram of a power conversion device according to an embodiment of the present invention.
FIGS. 3 and 4 are exemplary circuit diagrams of the power conversion device according to an embodiment of the present invention.
FIGS. 5 to 7 are views for explaining a switching operation of the power conversion device according to an embodiment of the present invention.
FIGS. 8a to 8c are views illustrating simulation results of the operation of the power conversion device according to an embodiment of the present invention.
FIG. 9 is a view illustrating a connection relationship of the power conversion device, in which inputs are connected in series, and outputs are connected in parallel, according to an embodiment of the present invention.
FIGS. 10 to 13 are views for explaining a process of balancing an input voltage by the power conversion device according to an embodiment of the present invention.
FIGS. 14a and 14b are views illustrating simulation results of an input voltage balancing operation of the power conversion device according to an embodiment of the present invention.

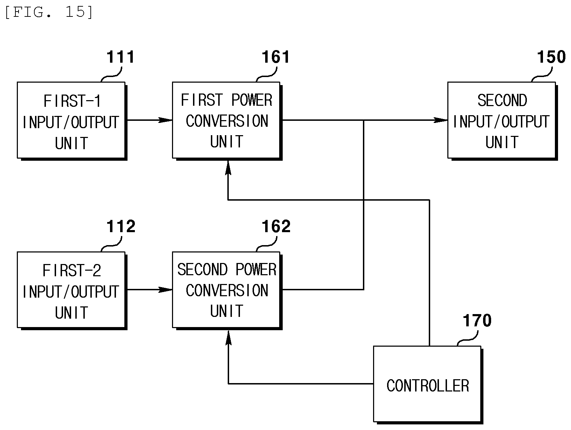

FIG. 15 is a block diagram of the power conversion device, in which the inputs are connected in series, according to an embodiment of the present invention.

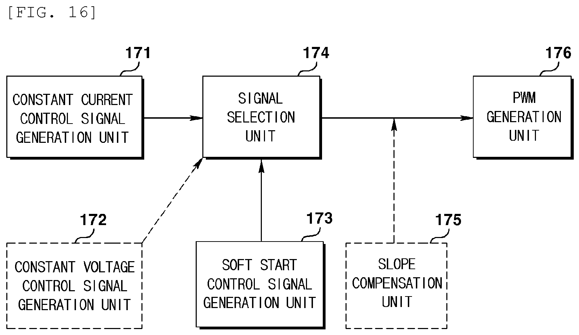

FIGS. 16 to 19 are views for explaining a process, in which the power conversion device is driven in both directions, according to an embodiment of the present invention.
FIGS. 20a to 20c and FIGS. 21a to 21c views illustrating simulation results of the bidirectional driving of the power conversion device according to an embodiment of the present invention.
FIG. 22 is a view for explaining a process, in which the power conversion device performs initial charging, according to an embodiment of the present invention.
FIGS. 23a and 23b are views illustrating simulation results of the initial charging of the power conversion device according to an embodiment of the present invention.

### MODE FOR CARRYING OUT THE INVENTION

Hereinafter, preferred embodiments of the present invention will be described in detail with reference to the accompanying drawings.

However, the technical idea of the present invention is not limited to some of the embodiments described, but may be implemented in various different forms, and one or more of the components in embodiments may be selectively combined or substituted for use even within the scope of the technical idea of the present invention.

In addition, terms (including technical and scientific terms) used in the embodiments of the present invention may be interpreted as having a meaning that may be generally understood by a person of ordinary skill in the technical field to which the present invention belongs, unless explicitly and specifically defined and described, and the terms that are commonly used, such as terms defined in a dictionary, may be interpreted in consideration of the contextual meaning of the relevant technology.

In addition, the terms used in the embodiments of the present invention are for the purpose of describing the embodiments and are not intended to limit the present invention.

In this specification, the singular may also include the plural unless specifically stated otherwise in the phrase, and when it is described as "A and (or at least one) of B, C", it may include one or more of all combinations that may be combined with A, B, C.

In addition, in describing components of the embodiments of the present invention, the terms such as first, second, A, B, (a), (b), etc. may be used. These terms are only intended to distinguish one component from another and are not intended to limit the nature, order, or sequence of the component.

In addition, when a component is described as being 'connected', 'coupled', or 'linked' to another component, it may include not only cases where the component is 'connected', 'coupled', or 'linked' directly to the other component, but also cases in which the component is 'connected', 'coupled', or 'linked' by another component between the component and the other component.

In addition, when described as being formed or arranged "above (upper)" or "below (lower)" each component, "above (upper)" or "below (lower)" includes not only the case where the two components are in direct contact with each other, but also the case in which one or more other components are formed or arranged between the two components. In addition, when expressed as "above (upper)" or "below (lower)", it may include the meaning of not only the upward direction but also the downward direction based on one component.

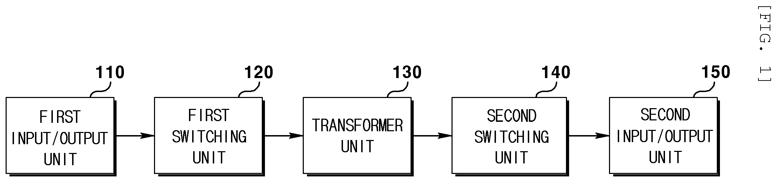

FIG. 1 is a block diagram of a power conversion device according to an embodiment of the present invention.

A power conversion device according to an embodiment of the present invention may be constituted by a first input/output unit 110, a first switching unit 120, a transformer unit 130, a second switching unit 140, and a second input/output unit 150 and may include a controller 170, a first inductor L1, a second inductor L2, a third inductor L3, and a first capacitor C1. The power conversion device according to an embodiment of the present invention may be an active-clamp forward flyback converter. In addition, the power conversion device may be a converter in which input sides are connected in series, and output sides are connected in parallel.

The first input/output unit 110 is connected to a high-voltage side.

The first input/output unit 110 may be connected to the high-voltage side so that a high voltage is inputted, or a converted voltage is outputted to the high-voltage side. In a buck mode, the first input/output unit 110 may serve as an input unit, and in a boost mode, the first input/output unit 110 may serve as an output unit. The first input/output unit 110 may include a high-voltage-side capacitor. Here, the "high voltage" means that a voltage of a battery or power source connected to the first input/output unit 110 is relatively higher than a voltage of a battery or load side connected to the second input/output unit 150 when compared to each other, and does not mean a voltage having a specific magnitude.

A high-voltage battery may be connected to the first input/output unit 110. Alternatively, an external power source may be connected. For example, a voltage of the external power source or battery connected to the first input/output unit 110 may be in a range of 400 V to 800 V. Two 400 V batteries may be connected in series to operate as an 800 V battery. This will be described in detail below.

The first switching unit 120 is connected to the first input/output unit 110.

The first switching unit 120 may be connected to the first input/output unit 110 to transfer a voltage inputted to the first input/output unit 110 to the transformer unit 130 or transfer a voltage outputted from the transformer unit 130 to the first input/output unit 110.

The first switching unit 120 may include a first switch 122 and a second switch 121, which are electrically conducted in a complementary manner. A connection relationship and operations of the first switch 122 and the second switch 121 will be described in detail later.

The transformer unit 130 includes a first transformer 131 and a second transformer 132, each of which a primary side is connected to the first switching unit 120. The transformer may be an insulated-type transformer. The transformer unit 130 may include a bidirectional transformer that converts a voltage inputted to the primary side to output the converted voltage to a secondary side, or converts a voltage inputted to the secondary side to output the converted voltage to the primary side. A direction of the first input/output unit 110 is described as the primary side of the transformer unit 130, and a direction of the second input/output unit 150 is described as the secondary side of the transformer unit 130. That is, the primary side of the transformer may be at a high voltage, and the secondary side may be at a low voltage, and thus, a turn ratio of the primary side and the secondary side may be n:1.

The second switching unit 140 is connected to the secondary side of the transformer unit 130.

The second switching unit 140 may be connected to the secondary side of the transformer unit 130 so that the voltage outputted from the transformer unit 130 is outputted to the second input/output unit 150. The second switching unit 140 may operate as a rectifier that rectifies the output voltage of the transformer unit 130. The second switching unit 140 may include a third switch 141 connected to the secondary side of the first transformer 131 and a fourth switch 142 connected to the secondary side of the second transformer 132.

Each of the third switch 141 and the fourth switch 142 may include an FET and may be an MOSFET including a body diode. In addition, each of the third switch 141 and the fourth switch 142 may be an synchronous rectification (SR) MOSFET. Each of the first switch 122 and the second switch 121 may be the same as each of the third switch 141 and the fourth switch 142 and may be an FET, an MOSFET including a body diode, or an SR MOSFET.

The second input/output unit 150 is connected to the secondary side and the low-voltage side of the transformer unit 130.

The second input/output unit 150 is connected to the secondary side of the transformer unit 130 and may output the voltage converted by the transformer unit 130 to the low-voltage side or may receive the voltage from the low-voltage side to transfer the received voltage to the transformer unit 130. In the buck mode, the second input/output unit 150 may serve as an output unit, and in the boost mode, the second input/output unit 150 may serve as an input unit. The second input/output unit 150 may include a low-voltage-side capacitor. Here, the "low voltage" means that a voltage of a battery or load connected to the second input/output unit 150 is relatively lower than a voltage of a battery or power source connected to the first input/output unit 110 when compared to each other, and does not mean a voltage having a specific magnitude.

A low-voltage battery may be connected to the second input/output unit 150. Alternatively, a load may be connected. For example, the voltage of the battery connected to the second input/output unit 150 may be 12 V.

The first switch 122 may be connected in series to the transformer unit 130, and the second switch 121 may be connected in parallel to the transformer unit 130. The first switch 122 may include a first inductor L1 connected in series to the transformer unit 130 between the first input/output unit 110 and the transformer unit 130 and also may include a second inductor L2 connected in parallel to the primary side of the first transformer 131 and a third inductor L3 connected in parallel to the primary side of the second transformer 132. In addition, a first capacitor C1 connected to a first node between the first input/output unit 110 and the first inductor L1 and connected in series to the second switch 121 may be provided. The first switch 122 may be configured to be connected to a second node between the first switch 122 and the transformer unit 130.

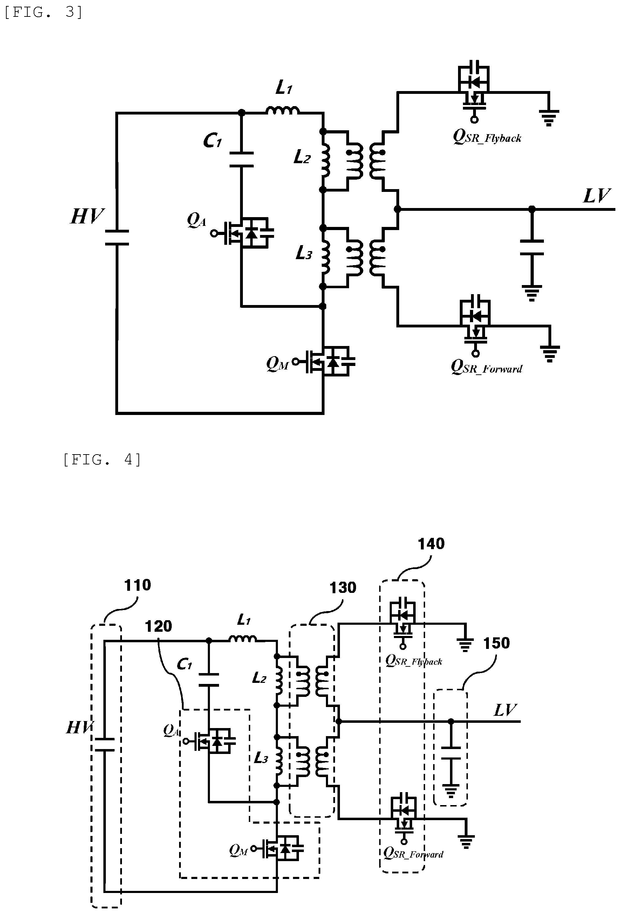

The first input/output unit 110, the first switching unit 120, the voltage transformer unit 130, the second switching unit 140, and the second input/output unit 150 may be implemented as shown in FIG. 3. Each component may correspond to that of FIG. 4.

In FIG. 3, the first switch 122 may be referred to as a master switch Q_M, the second switch 121 may be referred to as an auxiliary switch Q_A, the first inductor may be referred to as L1, the second inductor may be referred to as L2, the third inductor may be referred to as L3, and the first capacitor may be referred to as C1, and also, the third switch 141 may be referred to as Q_SR_Flyback, and the fourth switch may be referred to as Q_SR_Forward, and may be connected as illustrated in FIG. 3. The first input/output unit 110 may include a high-voltage-side capacitor, and the second input/output unit 150 may include a low-voltage-side capacitor. The first inductor L1, the second inductor L2, and the third inductor L3, and the first capacitor C1 may constitute an LC filter to constitute a noise filter unit that removes noise from an input voltage.

A direction of current applied to the transformer unit 130 may be changed depending on the operations of the first switch 122 and the second switch 121. The first switch 122 and the second switch 121 are electrically conducted in a complementary manner to allow the current to flow through the first transformer 131 and the second transformer 132 and may change a flow direction of the current.

The battery is connected to the high-voltage side, and the voltage is input to the first input/output unit 110. Here, when the first switch 122 is turned on, and the second switch 121 is turned off, the current flows in a first direction, in which the first inductor L1, the second inductor L2, the third inductor L3, and the first switch 122 are connected. The current flows through the first transformer 131 and the second transformer 132, and the voltage is applied to the first transformer 131 and the second transformer 132. The first transformer 131 and the second transformer 132 convert the inputted voltage to output the voltage to the secondary side. Here, when the fourth switch 142 is turned on, a current path is formed through the fourth switch 142 and the secondary side of the second transformer 132 so that the voltage is outputted to the low-voltage side.

When the first switch 122 is turned off, and the second switch 121 is turned on, no current flows through the first switch 122, and the current flows in a second direction, in which the first capacitor C1, the second switch 121, the third inductor L3, the second inductor L2, and the first inductor L1 are connected. That is, the current flows in an opposite direction, and thus, noise generated by applying the voltage to the first transformer 131 and the second transformer 132 may be removed. In addition, when the third switch 141 is turned on, the current path to the second input/output unit 150 is provided through the third switch 141 and the secondary side of the first transformer 131, so that the voltage is outputted to the low-voltage side.

Since the noise is removed by the operations of the first switch 122 and the second switch 121, an inductor that removes the noise may not be included at the secondary side of the transformer unit 130, that is, the second input/output unit 150. In order to withstand high current, the inductor may increase in size to lead to increase in cost. However, the inductor may not be provided in the second input/output unit 150 to reduce the size and costs.

The controller 170 controls the first to fourth switches so that, when the voltage is inputted from the high-voltage side to the first input/output unit, the voltage is outputted from the second input/output unit to the low-voltage side, and when the voltage is inputted from the low-voltage side to the second input/output unit, the voltage is outputted from the first input/output unit to the high-voltage side.

The controller 170 may electrically conduct the first switch 122 to the second switch 121 in the complementary manner and may control the switches by applying a dead-time or delay-time for zero voltage switching (ZVS).

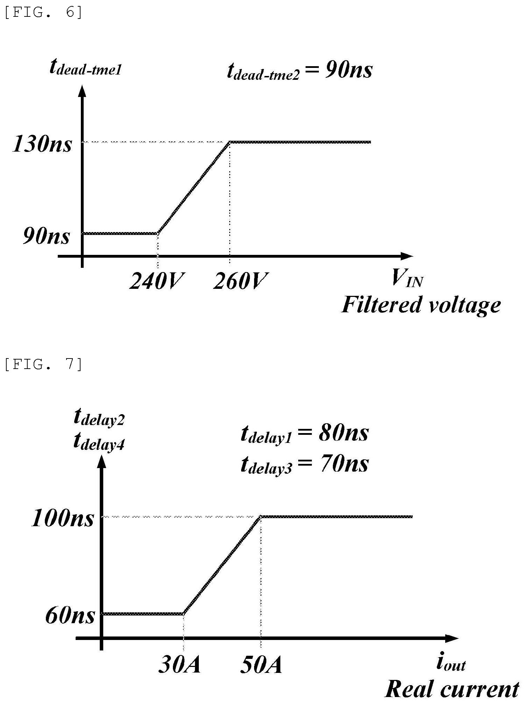

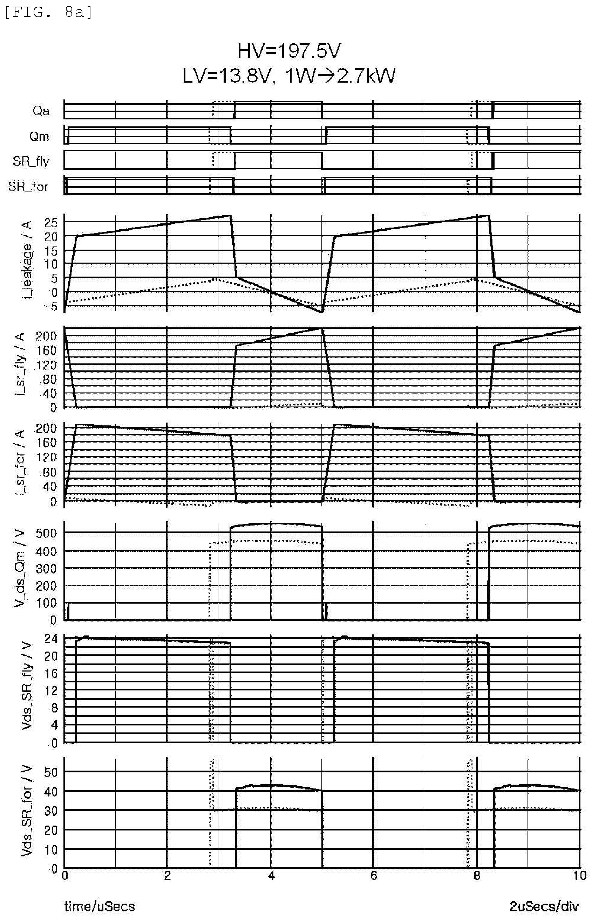

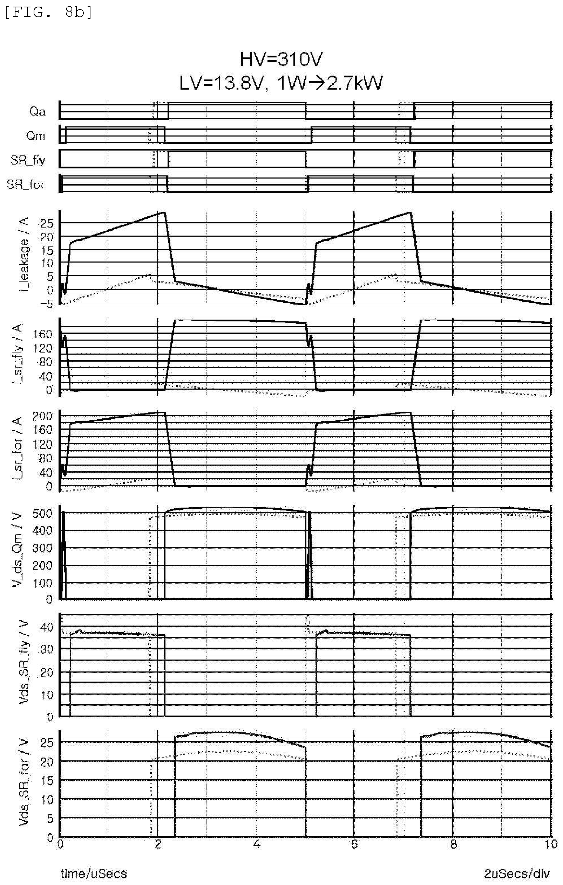

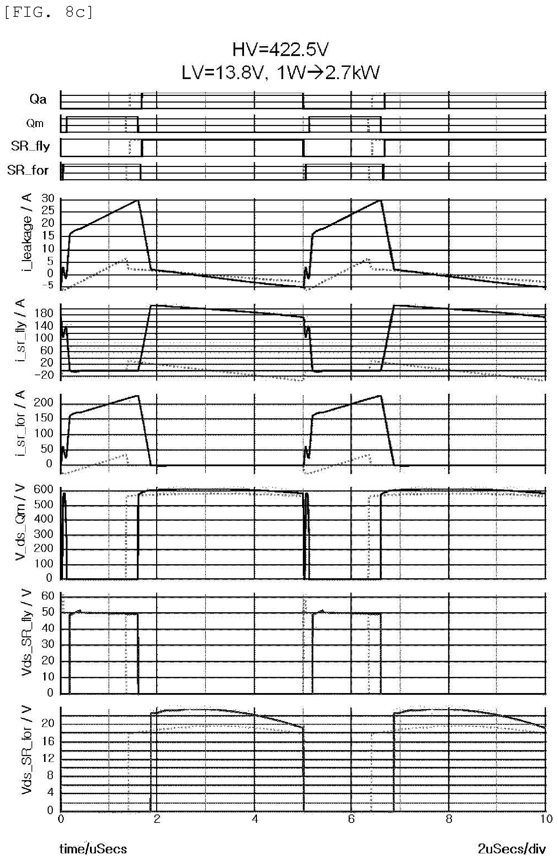

At a time point at which the second switch 121 is turned off, and the first switch 122 is turned on, the second switch 121 may be controlled to be turned off, and then, after the first time, the first switch 122 may be controlled to be turned on. Here, the first time may vary depending on the applied voltage. After the second switch 121 is turned off so that the first switch 122 is turned on at a zero voltage, the dead-time at which both the first switch 122 and the second switch 121 are turned off for the first time is applied. Here, the first time may become longer as the input voltage increases. For example, as shown in FIG. 6, when an input voltage V_IN is less than 240 V, the dead-time of 90 ns, which is a minimum dead-time for the zero voltage switching, is applied. In a range of 240 V to 260 V, the dead-time may increase linearly within a range of 90 ns to 130 ns. When it exceeds 130 ns, it may be difficult to secure a duty time for the voltage conversion, and thus, the first time may be limited to 130 ns or less. Results of simulation, in which the first time varies depending on the input voltage, are shown in FIGS. 8a to 8c. As the input voltage increases, the first time may increase to achieve the zero voltage switching.

At a time point at which the first switch 122 is turned off, and the second switch 121 is turned on, the first switch 122 may be controlled to be turned off, and then, after the first time, the second switch 121 may be controlled to be turned on. Here, the second time may be a preset time to be applied. When the second switch 121 is turned on, since an influence of the zero voltage switching is not significant, the second time may be fixed as a preset time to apply the dead-time. Here, the second time may be set as a minimum dead-time for the zero voltage switching. For example, as shown in FIG. 6, the second time may be set to 90 ns. Alternatively, the second time may be controlled to vary in response to the first time.

The controller 170 may also apply the delay time to control the third switch 141 and the fourth switch 142.

The third switch 141 may be controlled to operate in response to the operation of the second switch 121 or may be controlled to operate after a preset time. Since the operation of the third switch 141 is not greatly affected by the zero voltage switching, and a peak voltage is also not high, like the second switch 121, the preset time may be applied to the third switch 141. Here, a fixed time of 80 ns or 70 ns may be applied.

The fourth switch 142 may be controlled to be turned off after the second switch 121 is turned off for a third time and then turned on, and the first switch 122 may be controlled to be turned off after the first switch 122 is turned off for a fourth time. Here, the third time and the fourth time may vary depending on the output current. After the second switch 121 is turned off so that the fourth switch 142 is turned on at the zero voltage, the second switch 121 may not be turned on immediately, but the delay time of the third time may be applied. Here, the third time may be longer as the output current increases. In addition, after the first switch 122 is turned off, the first switch 122 may not be turned off immediately, but may remain on for the fourth time and then be turned off by applying the delay time. For example, as shown in FIG. 6, when output current i_out is less than 30 A, the delay time may be applied for 60 ns to reduce the peak voltage of the fourth switch at a light load of the SR MOSFET. In addition, in a range of 30 to 50 A, the delay time may increase linearly within 60 to 100 ns to perform the zero voltage switching turn-on of the SR MOSFET at an intermediate load. When it exceeds 100 ns, it may be difficult to secure the duty time for the voltage conversion, and thus, the third and fourth times may be limited to 100 ns or less.

The power conversion device according to an embodiment of the present invention may be constituted by a first-1 input/output unit 111, a first-2 input/output unit 112, a first power conversion unit 161, a second power conversion unit 162, and a second input/output unit 150, and may include a controller 170. A plurality of batteries, rather than a single battery, may be connected to the first input/output unit 110. Here, the plurality of batteries may be connected in series. For example, two 400 V batteries may be connected in series to operate at an 800 V voltage.

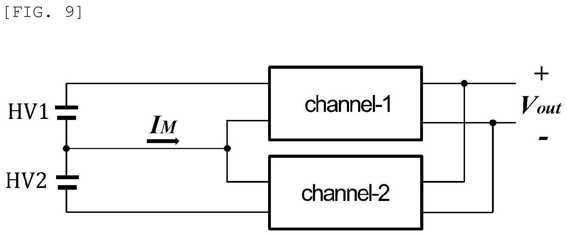

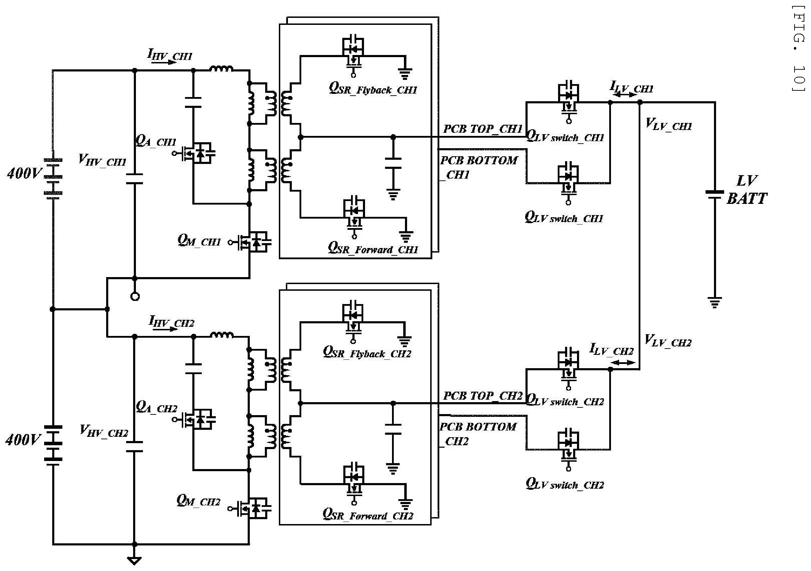

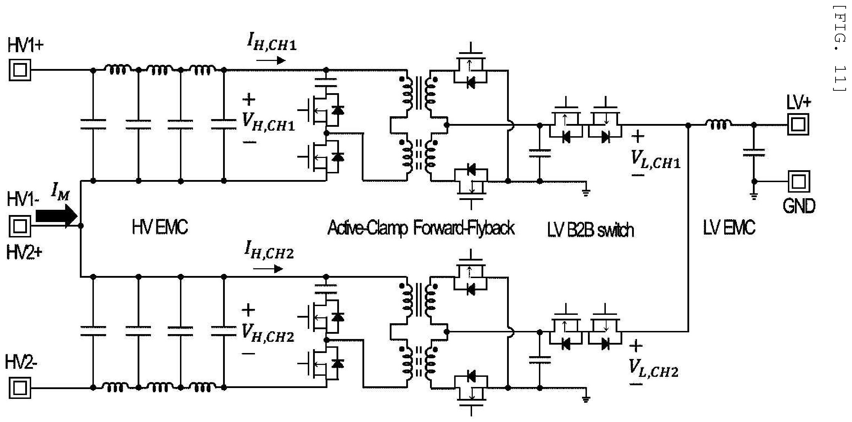

As shown in FIGS. 9 to 11, two high-voltage sides may be connected in series to a first input/output terminal, and the voltage may be converted through two power conversion units 161 and 162, i.e., two channels. Outputs of the channel may be connected in parallel so that the voltage is outputted to the second input/output terminal. Here, the power conversion device may be a two-channel DC-DC converter having a serial input and a parallel output structure and may be an active clamp forward flyback converter that is bidirectionally driven.

The first-1 input/output unit 111 and the first-2 input/output unit 112 may be connected to a first high-voltage side and a second high-voltage side, which are connected in series, respectively. The first power conversion unit 161 may be connected to the first-1 input/output unit 111, and the second power conversion unit 162 may be connected to the first-2 input/output unit 112. The first power conversion unit 161 and the second power conversion unit 162 may be connected in parallel to be connected to the second input/output unit 150.

Here, when the voltages of the two high-voltage sides are different from each other, current I_M flows between the two channels of the first power conversion unit 161 and the second power conversion unit 162, and the balance between the two channels may be disrupted. That is, if one of the batteries connected to the high-voltage side is discharged first, and the voltage difference increases, efficient charging and discharging of the battery may become difficult, and the battery's lifespan may be shortened.

In order to maintain the balance, the operation of the first power conversion unit or the second power conversion unit may be controlled by using the difference between the first input voltage of the first power conversion unit and the second input voltage of the second power conversion unit. As a result, input voltage balancing may be achieved.

The controller 170 may operate the first power conversion unit 161 and the second power conversion unit 162 in a peak current mode and may compensate for a current rising slope of the peak current mode according to the difference between the first input voltage and the second input voltage.

The peak current mode is a control mode in which, when controlling the switch, the switch is maintained to be turned on until a time point at which the current increases according to the current rising slope and meets a reference voltage.

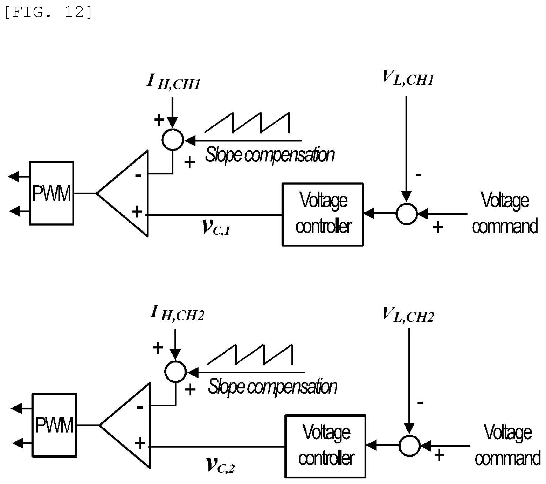

As shown in FIG. 12, the controller 170 generates a PWM signal to be applied to each switch according to the peak current mode and may compensate for the current rising slope in the peak current mode according to the difference between the first input voltage and the second input voltage.

When the first input voltage is less than the second input voltage, the current rising slope in the peak current mode of the first power conversion unit 161 becomes smaller. Here, the current rise compensation slope in the peak current mode of the first power conversion unit 161 may increase, and thus, average current of the first power conversion unit may become smaller than average current of the second power conversion unit. As a result, the current of the first power conversion unit 161 decreases, resulting in slowing down the discharge, thereby maintaining the balance with the second power conversion unit 162.

The power conversion device may further include a compensation unit configured to compensate for the difference between the first input voltage of the first power conversion unit and the second input voltage of the second power conversion unit, and the PWM signal applied to the first power conversion unit or the second power conversion unit may be generated according to an operation of the compensation unit. A first battery may be connected to the first high-voltage side, and a second battery may be connected to the second high-voltage side. The controller 170 may control the operations of the first power conversion unit 161 and the second power conversion unit 162 so that the first battery and the second battery are balanced.

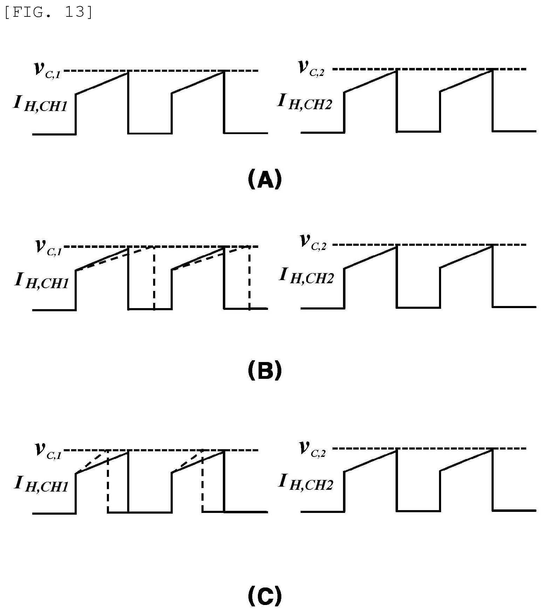

FIG. 13(A) illustrates a basic current rise slope, and FIG. 13(B) illustrates a case in which the balancing is not performed. In this case, a low input voltage results in a smaller current rise slope, and since the current rise compensation slope is applied identically to both the first power conversion unit 161 and the second power conversion unit 162, the input current of the first power conversion unit 161 becomes larger than that of the second power conversion unit 162. As a result, the battery connected to the first high-voltage side discharges more quickly than the battery connected to the second high-voltage side, and the current I_M at a middle point connecting the first high-voltage side to the second high-voltage side gradually increases.

To prevent this, although the current rise slope is compensated, the current rise compensation slope may be calculated using the following Equation.$\begin{matrix}\left(slope-1\right) = k 1 + k 2 \left(V_H, CH2-V_H, CH1\right) \\ \left(slope-2\right) = k 1 + k 2 \left(V_H, CH1-V_H, CH2\right)\end{matrix}$

Here, slope-1 is a current rise compensation slope of the first power conversion unit, k1 and k2 are constants, V_H,CH1 is a first input voltage, and V_H,CH2 is a second input voltage.

When the balancing control is applied, as shown in FIG. 13(C), the current rise compensation slope of the first power conversion unit 161 increases. As a result, the average current of the first power conversion unit 161 decreases, and the battery connected to the first high-voltage side is discharged more slowly than the battery connected to the second high-voltage side. The current I_M at the middle point connecting the first high-voltage side to the second high-voltage side gradually decreases until the balance is achieved, and then becomes zero in a normal state.

For example, when V_H,CH1 is smaller than V_H,CH2, slope-1 may increase, and slope-2 may decrease. As slope-1 increases, the switch of the first channel on the side of the first power conversion unit is turned off first. As a result, the battery connected to the first high-voltage side is discharged more slowly, and V_H,CH1 and V_H,CH2 gradually become equal to each other to maintain the balance.

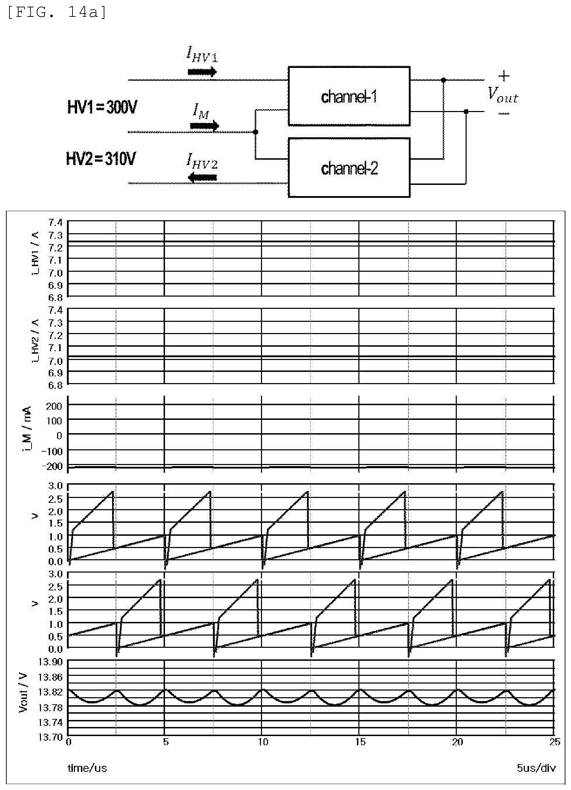

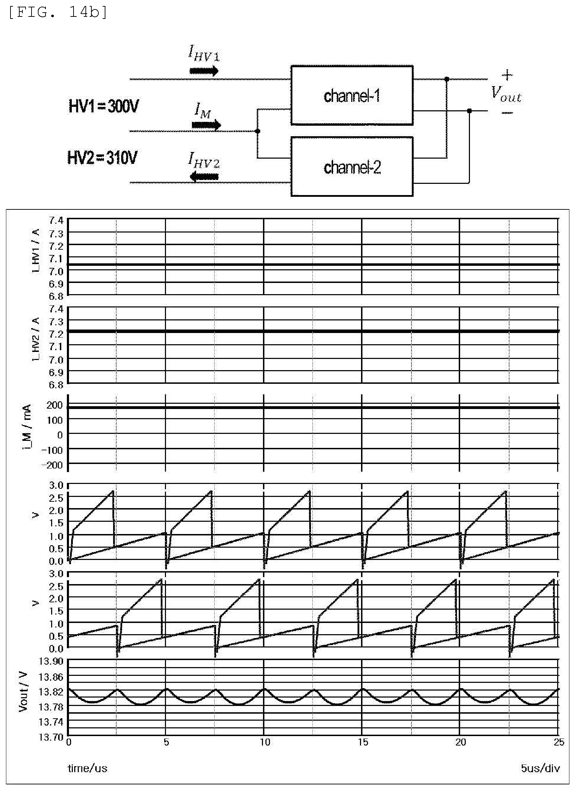

As shown in FIG. 14A, when HV1 is 300 V, and HV2 is 310 V, in the case in which the balancing is not performed, a rising slope of pulse current I_H,CH1 of a channel 1 is less than a rising slope of pulse current I_H,CH2 of a channel 2, but the current rising compensation slopes are the same. Thus, average current of the pulse current I_H, CH1 of the channel 1 becomes larger than average current of the channel 2 I_H, CH2. Since input battery current I_HV1 is the average current of the pulse current I_H, CH1 of the channel 1, HV1 current becomes larger than HV2 current. In contrast, in the case of performing the balancing as shown in FIG. 14b, the rising slope of the pulse current I_H, CH1 of the channel 1 is less than the slope of the pulse current I_H, CH2 of the channel 2. Thus, the average current of the pulse current I_H, CH1 of the channel 1 becomes smaller than the average current of the channel 2 I_H, CH2. Since the input battery current I_HV1 is the average current of the pulse current I_H, CH1 of the channel 1, the current of the first high-voltage side HV1 becomes smaller than the current of the second high voltage HV2. Thus, the middle point current becomes a positive value, and this indicates that the HV1 battery is discharged more slowly than the HV2 battery. As a result, the middle point current decreases and becomes zero in the normal state.

As mentioned above, the power conversion device according to an embodiment of the present invention operates in both directions. That is, when the first input/output unit and the second input/output unit, which are connected to the first high-voltage side and the second high-voltage side, respectively, are connected in series, the voltage of the first high-voltage side and the voltage of the second high-voltage side may be converted to be outputted to the low-voltage side, or the voltage of the low-voltage side may be converted to be outputted to the first high-voltage side or the second high-voltage side, and may operate in both directions.

The controller 170 may control the first to fourth switches so that the switches operate in the buck mode and the boost mode. Here, the controller 170 may control the power conversion unit 160 in the peak current mode from the buck mode in which a voltage is inputted from the first high-voltage side or the second high-voltage side and stepped down and may control the power conversion unit 160 in the average current mode from the boost mode in which a voltage is inputted from the low-voltage side and stepped up.

The controller 170 may be constituted by a constant current control signal generation unit 171, a soft start control signal generation unit 173, a signal selection unit 174, and a PWM generation unit 176 to perform the control in the buck mode or boost mode and may further include a constant voltage control signal generation unit 172 and a slope compensation unit 175.

The configuration In the buck mode and the configuration in the boost mode may be provided as separate modules or may be provided as one module. Here, only the configuration required for each mode are used to operate in both directions.

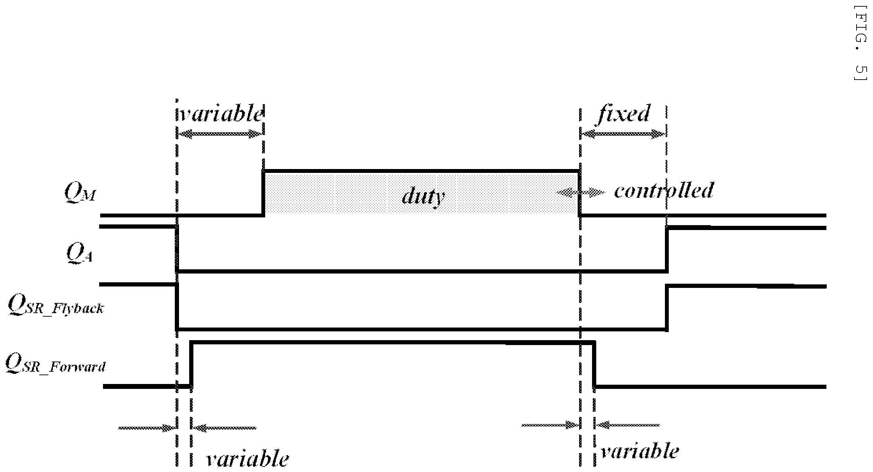

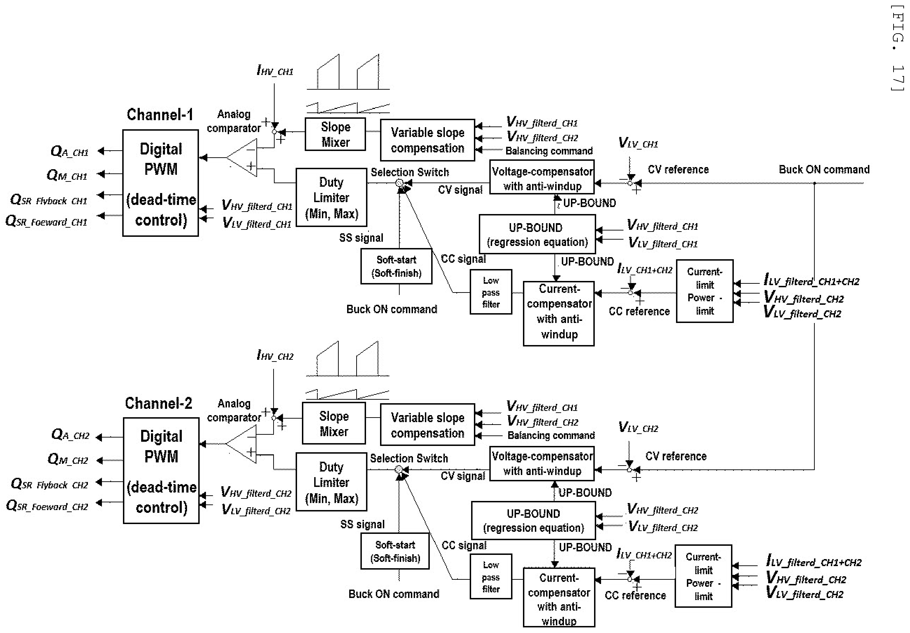

In the buck mode, it may be controlled through the constant current control signal generation unit 171, the soft start control signal generation unit 173, the signal selection unit 174, and the PWM generation unit 176, the constant voltage control signal generation unit 172, and the slope compensation unit 175. The constant current control signal generation unit 171 rectifies the low-voltage side voltage to generate a constant current control signal. The constant voltage control signal generation unit 172 rectifies the low-voltage side current and power to generate a constant voltage control signal. The soft start control signal generation unit 173 may generate a soft start control signal that operates to block inrush current or a peak voltage. The signal selection unit 174 may select a signal having a smaller value among the constant current control signal, the constant voltage control signal, and the soft start control signal. In addition, the controller 170 may control the first power conversion unit and the second power conversion unit in the peak current mode, and the slope compensation unit 175 may compensate for the current rising slope in the peak current mode according to the difference between the first input voltage and the second input voltage. The controller 170 may control the first to fourth switches in the buck mode and may perform the control according to the description referring to FIG. 5. The operation of the controller 170 in the buck mode may be implemented as shown in FIG. 17.

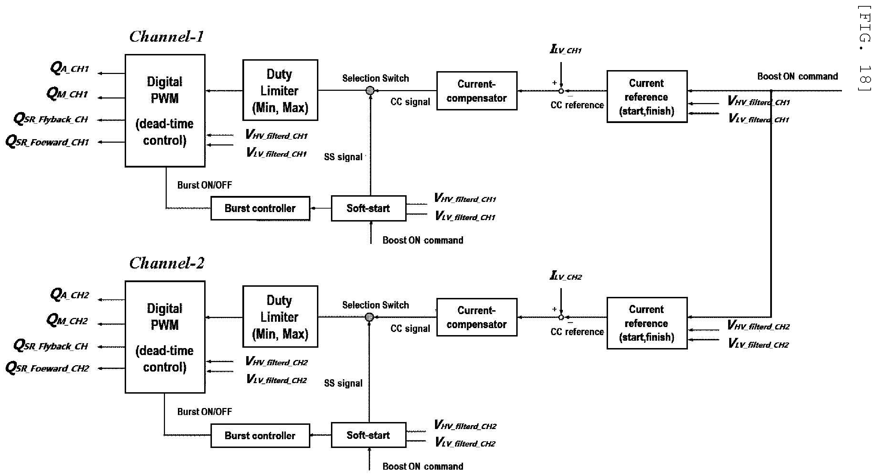

In the boost mode, it may be controlled through the constant current control signal generation unit 171, the soft start control signal generation unit 173, the signal selection unit 174, and the PWM generation unit 176. The constant current control signal generation unit 171 may rectify the low-voltage-side voltage to generate the constant current control signal. The soft start control signal generation unit 173 may generate the soft start control signal for blocking the inrush current or peak voltage. The signal selection unit 174 may select a signal having a smaller value among the constant current control signal, the constant voltage control signal, and the soft start control signal. In addition, the controller 170 may control the first power conversion unit and the second power conversion unit in an average current mode. In the boost mode, the operation of the controller 170 may be implemented as shown in FIG. 18.

In the boost mode, the controller 170 may control the first to fourth switches 142, unlike the buck mode. The controller 170 may include the PWM generation unit 176 that controls a dead-time or a delay-time of each of the first to fourth switches 141 to 144.

The controller 170 performs the control so that the second switch 121 is turned off, and then, after a first time, the first switch 122 is turned, and also performs the control so that the first switch 121 is turned off, and then, after a second time, the second switch 121 is turned on. Here, the first time may vary depending on an applied voltage, and the second time may be a preset time to be applied.

In addition, the controller 170 may control the third switch 141 so that the third switch 141 operates in response to the operation of the second switch 121 or in response to the preset time and also may control the fourth switch to be turned on when a third time is elapsed after the second switch 121 is turned off and to be turned off when a fourth time is elapsed after the first switch 122 is turned off. Here, the third time and the fourth time may vary depending on output current.

The controller 170 may control the third switch 141 to be turned on when a fifth time is elapsed after the first switch 122 is turned off and to be turned off when a sixth time is elapsed after the fourth switch 142 is turned on.

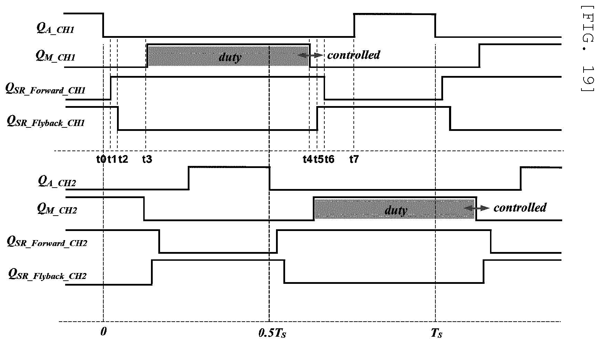

As shown in FIG. 19, during one cycle of the boost mode, the second switch may be turned off at a time t0, the fourth switch may be turned on at a time t1, the third switch may be turned off at a time t2, the first switch may be turned on at a time t3, the first switch may be turned off at a time t4, the third switch may be turned on at a time t5, the fourth switch may be turned off at a time t6, and the second switch may be turned on at a time t7. A "duty" refers to a time during which the first switch remains in the "turn-on" state.

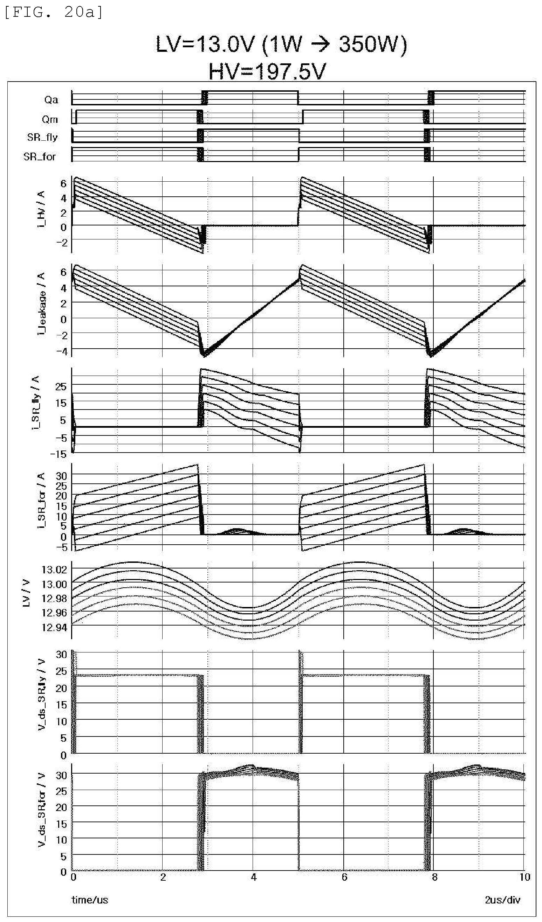

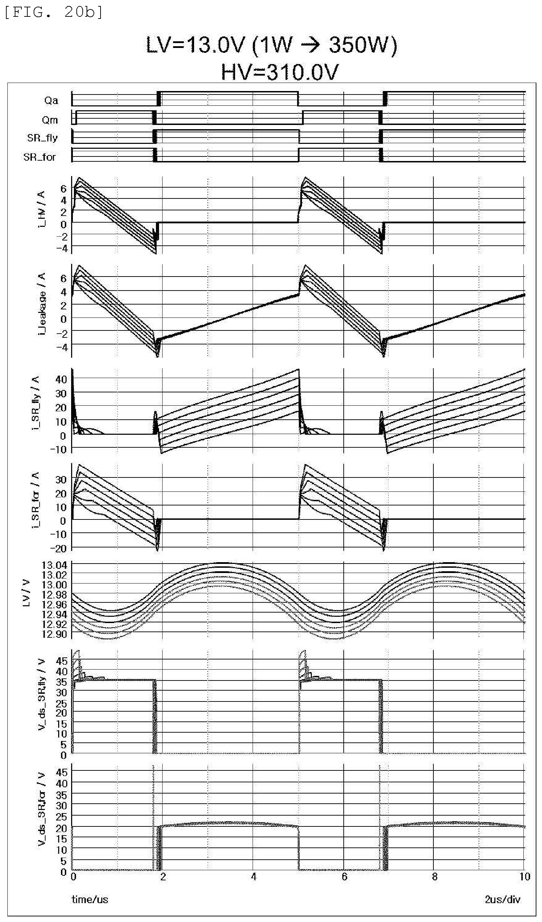

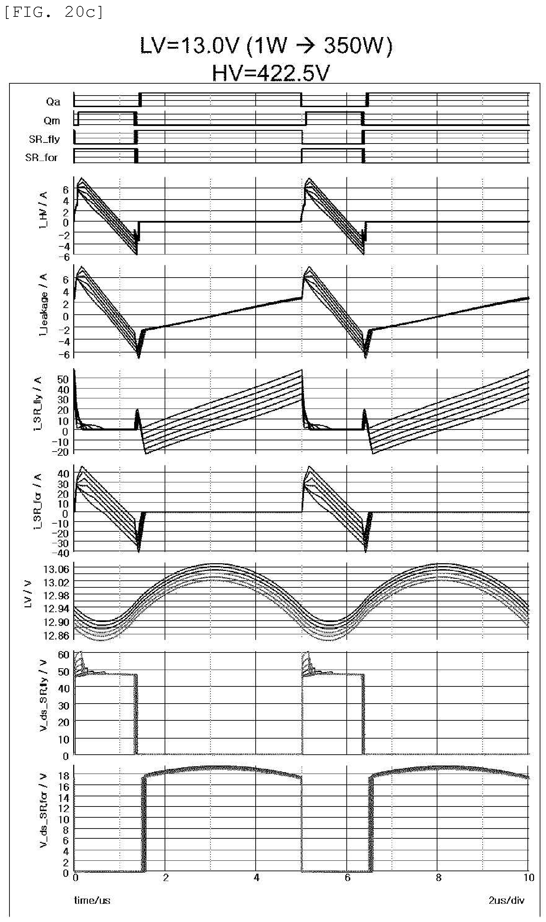

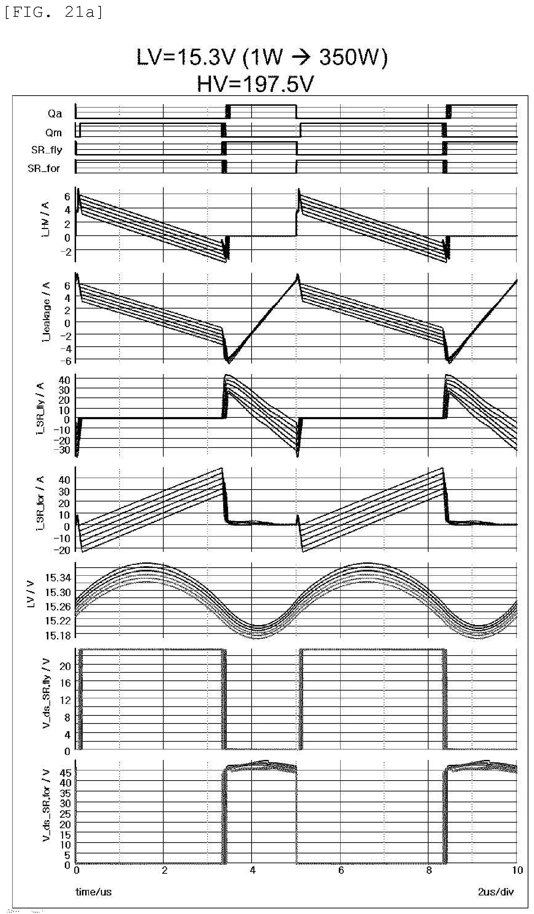

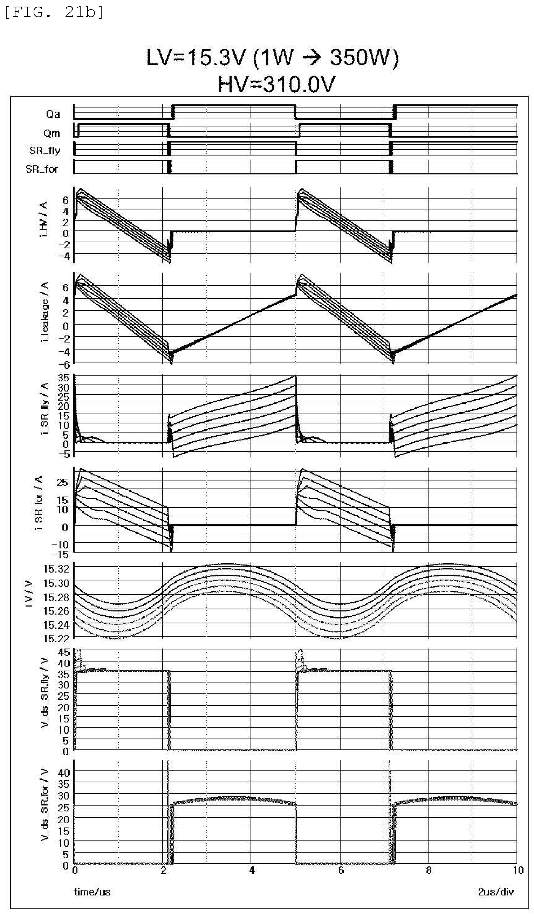

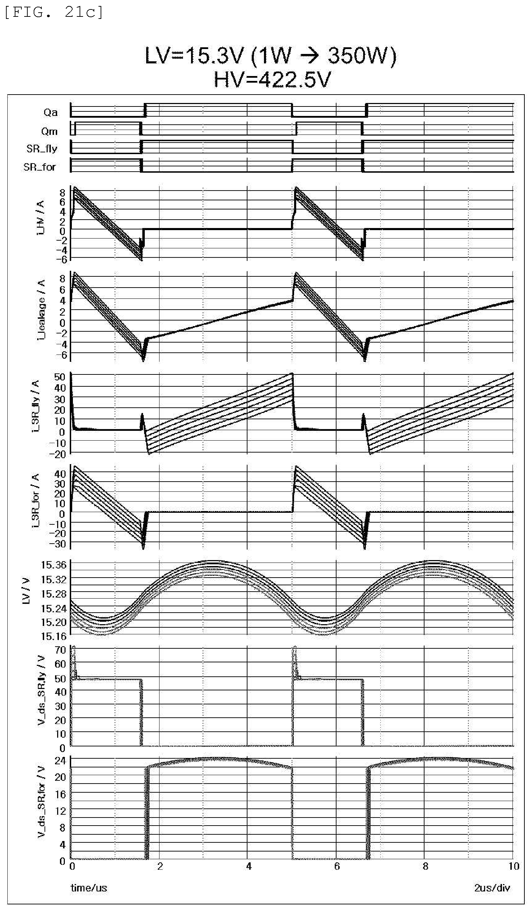

As described above, the operations of the first to fourth switches may be differently controlled to operate in the buck mode or the boost mode. The simulation results for the bidirectional operation of the buck mode and the boost mode are shown in FIGS. 20a to 20c and FIGS. 21a to 21c.

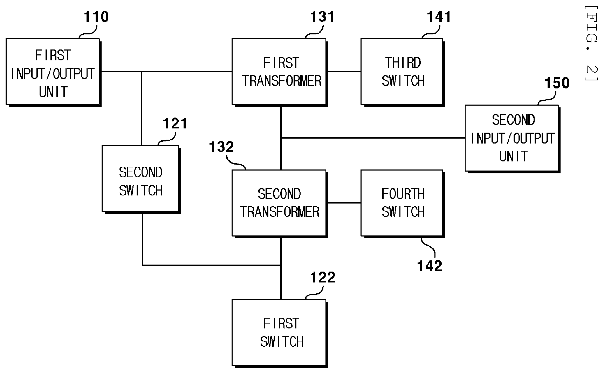

According to an embodiment of the present invention, the power conversion device may initially charge the capacitor at the high-voltage side using the low-voltage-side voltage. In the power conversion device according to an embodiment of FIGS. 1 to 4, initial charging may be performed without a separate initial charging circuit through the operation control of the first to fourth switches.

The controller 170 may turn on the fourth switch 142 and then turn off the fourth switch 142 after a seventh time, and may turn on the second switch 121 and the third switch 141 to initially charge the first capacitor C1. The second switch 121 and the third switch 141 may be turned off after the seventh time to charge the high-voltage-side capacitor. The time for maintaining the turn-on state for the initial charging may be the seventh time for all of the second switch 121, the third switch 141, and the fourth switch 142. The seventh time may be a preset time or a minimum time that has to be maintained for the initial charging. During the initial charging, the controller 170 may maintain the first switch 122 in the turn-off state.

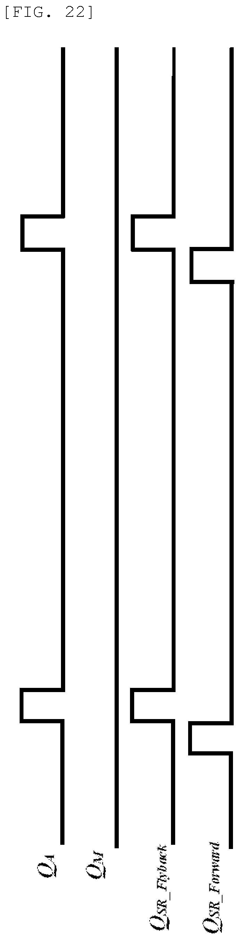

As shown in FIG. 22, the first switch 122 may be maintained in the turn-off state, the fourth switch 142 may be turned on for a predetermined time, and after the seventh time, the fourth switch 142 may be turned off, and the second switch 121 and the third switch 141 may be turned on and then turned off after the seventh time, thereby performing the initial charging.

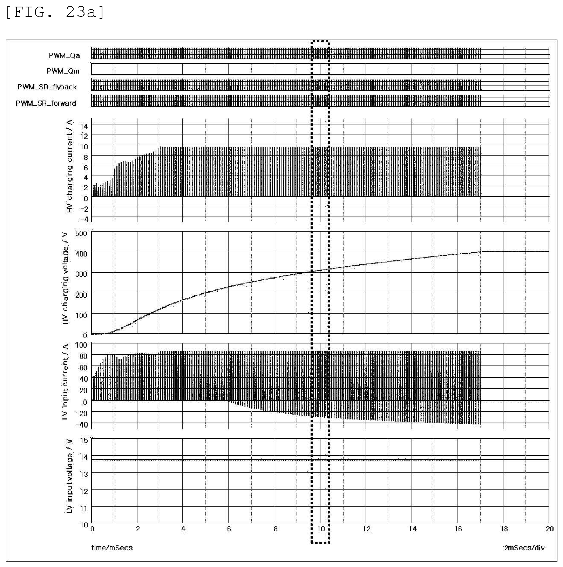

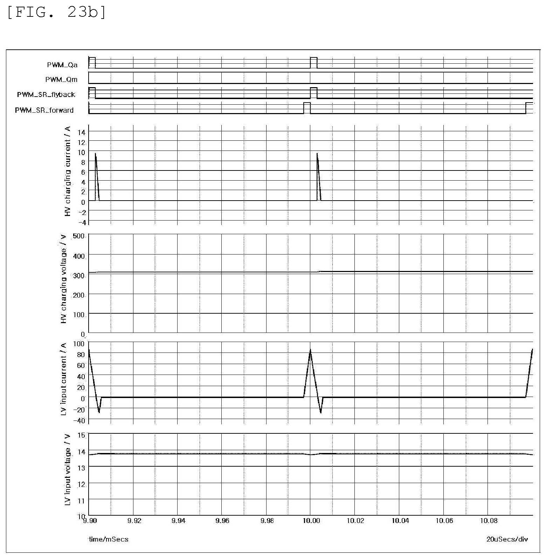

When the initially charging, as shown in FIG. 23a, when the input voltage at the low-voltage side is 13.8 V, the initial charging target voltage is 400 V, the high-voltage-side capacitor has a capacitance of 5 µF, a switching frequency is 10 kHz, and a maximum value of the seventh time is 3 µs, it may be confirmed that it takes 17 ms to charge the high-voltage-side capacitor from 0 V to 400 V. FIG. 23b is a detailed view of FIG. 23a.

As described above, the power conversion device according to an embodiment of the present invention includes the first input/output unit 110, the first switching unit 120, the transformer unit 130, the second switching unit 140, the second input/output unit 150, the controller 170, the first inductor L1, the second inductor L2, the third inductor L3, and the first capacitor C1. Thus, the first switch 122 and the second switch 121 of the first switching unit 120, and the third switch 141 and the fourth switch 142, which are the SR MOSFETs of the first switching unit 120, may be controlled to bidirectional operation in the both buck mode and the boost mode, and the input voltage balancing and the initial charging are possible. Therefore, the stable voltage may be provided, and the efficient power conversion may be possible.

It will be understood by those skilled in the art that various changes in form and details may be made therein without departing from the spirit and scope of the invention as defined by the appended claims. Therefore, the disclosed methods should be considered in descriptive sense only and not for purposes of limitation. Therefore, the scope of the invention is defined not by the detailed description of the invention but by the appended claims, and all differences within the scope will be construed as being included in the present invention.

## Claims

1. A power conversion device comprising:
a first input/output unit connected to a high-voltage side;
a first switching unit connected to the first input/output unit;
a transformer unit comprising a first transformer and a second transformer, each of which has a primary side connected to the first switching unit;
a second switching unit connected to a secondary side of the transformer unit; and
a second input/output unit connected to the secondary side of the transformer unit and a low-voltage side,
wherein the first switching unit comprises a first switch and a second switch, which are complementarily electrically conducted, and
the second switching unit comprises:
a third switch connected to a secondary side of the first transformer; and
a fourth switch connected to a secondary side of the second transformer,
wherein the first input/output unit comprises a high-voltage-side capacitor, and
wherein the power conversion device is configured to receive a voltage of the low-voltage-side and convert the received voltage to charge the high-voltage-side capacitor at a first voltage.

2. The power conversion device according to claim 1, comprising:
a first inductor connected in series to the transformer unit between the first input/output unit and the transformer unit;
a second inductor connected in parallel to the primary side of the first transformer;
a third inductor connected in parallel to the primary side of the second transformer; and
a first capacitor connected to a first node between the first input/output unit and the first inductor and connected in series to the second switch,
wherein the first switch is connected in series to the transformer unit,
the second switch is connected in parallel to the transformer unit, and
the first switch is connected to a second node between the first switch and the transformer unit.

3. The power conversion device according to claim 2, wherein the fourth switch is turned on and is turned off after a seventh time, and
wherein the second switch and the third switch are turned on so that the first capacitor is charged.

4. The power conversion device according to claim 3, wherein the second switch and the third switch are turned off after the seventh time so that the high-voltage-side capacitor is charged.

5. The power conversion device according to claim 2, wherein each of the first switch to the fourth switch comprises an MOSFET comprising a body diode.

6. The power conversion device according to claim 1, wherein, after the high-voltage capacitor is initially charged at the first voltage, a high-voltage battery is connected to the high-voltage side.

7. The power conversion device according to claim 6, wherein, when the high-voltage battery is connected to the high-voltage side, the high-voltage battery operates in buck mode or boost mode,
wherein, after a first time has elapsed since the second switch is turned off, the first switch is turned on,
wherein the first time varies depending on an applied voltage.

8. The power conversion device according to claim 7, wherein, after a second time has elapsed since the first switch is turned off, the second switch is turned on, and
wherein the second time is a preset time to be applied.

9. The power conversion device according to claim 8, wherein, in the buck mode, the third switch operates in response to an operation of the second switch or operates in response after the preset time is elapsed.

10. The power conversion device according to claim 9, wherein, in the buck mode, the fourth switch is turned on when a third time is elapsed after the second switch is turned off and is turned off when a fourth time is elapsed after the first switch is turned off,
wherein the third time and the fourth time vary depending on output current.
